# EUROPEAN PATENT SPECIFICATION

(11) **EP 3 296 790 B1**
(45) Date of publication and mention of the grant of the patent: **26.10.2022**
(21) Application number: 17191845.1
(22) Date of filing: 19.09.2017
(51) Int. Cl.: G02B 3/14, G02B 15/15, G02B 15/22, G02B 15/14, G02B 23/24

(54) **CAMERA HEAD WITH ZOOMING AND FOCUSING FUNCTION**
KAMERAKOPF MIT ZOOM- UND FOKUSSIEREINRICHTUNG
TÊTE DE CAMÉRA COMPORTANT UNE FONCTION DE ZOOM ET DE MISE AU POINT

(30) Priority: 20.09.2016 US 201615271057
(43) Date of publication of application: 21.03.2018
(73) Proprietor: Karl Storz Imaging, Inc., Goleta, CA 93117 (US)
(72) Inventor: Duckett, George E., Goleta, 93117 (US)
(74) Representative: Witte, Weller & Partner Patentanwälte mbB

(56) References cited:
- EP-A2- 2 157 782
- WO-A1-2006/071042
- JP-A- 2007 094 170
- US-A- 4 784 479
- US-A1- 2005 200 973

## Description

### BACKGROUND OF THE INVENTION

### Field of the Invention

The invention relates to an endoscope and to a lens arrangement for a camera head that attaches onto the endoscope. The lens arrangement provides zoom and focusing of a light beam onto an image sensor.

### Description of the Background Art

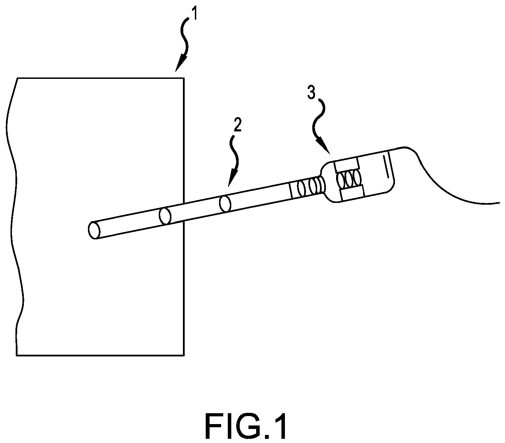

To image inside of enclosed areas 1 such as engines, airplane wings, ventilation ducts, safes, pressurized tanks, and the human body, it is often necessary to use an endoscope as shown in FIG. 1. An endoscope 2 usually includes a first imaging lens followed by a series of carrier lenses which capture and transmit light from inside the enclosed area 1 to the outside. The endoscope end outside the object (the proximal end) is attached to a camera head 3 or simply an eye-piece for viewing. The camera head usually includes additional lenses to focus or zoom the image view projected on the image sensor. The digital image from the image sensor can then be relayed to a computer for analysis and display.

The problem of imaging at an end of an endoscope is difficult due to limitations of form factor, propagation losses, and the wide range of distances at which objects are observed with an endoscope. The small diameter of the light carrier and corresponding light beam also makes zooming and focusing particularly difficult. Because of the small diameter, most conventional lens actuators require too much radial space to be used. However, some liquid lenses can fill the light channel and can vary without movement.

The endoscope lens in US 7,889,434 B2 includes a number of lens units where each lens can be individually reshaped by hydraulic pressure to change the focal length of each one. Each lens is a liquid lens containing a compressible liquid or gas so that when pressure is introduced to the gaps between the lenses the optical power of the lens changes. This method enables a set of fixed liquid lenses to focus and zoom.

US 7,889,434 B2 also discloses varying the position of several solid lenses by varying the pressure of a medium disposed in sealed chambers in between each lens of the lens cylinder. These pressure variations push the lenses closer of farther apart, changing the focal length of the lens unit. Both the methods of variable focus in US 7,889,434 B2, however, require complicated hydraulics, specialized fluids and sealed chambers which are difficult to manufacture and use.

A number of different lens systems are disclosed in US 2010/0231783 A1 which have varifocal deformable lenses along with solid lenses in various arrangements, the entire disclosure of which is incorporated herein by reference. Some of the varifocal zoom lenses simply change in optical power while others can flip between positive and negative optical power allowing the lens to focus or expand the light beam.

In addition, US 2010/0231783 A1 discloses several varifocal and deformable lenses which are used in either the zoom lens or the focal lens, or both. Both the deformable zoom lens and deformable focal lens are constructed of a membrane with a deformable portion and a filler material. The deformable portion can be tuned at least in part by an electrostatic actuator, an electromagnetic actuator, a piezo-motor, a magneto-strictive actuator, a stepper motor, or an electroactive polymer actuator for a high focus tuning range.

US 2011/0118610 A1 discloses an endoscope with a zoom lens and a movable image sensor, where the zoom lens is a liquid zoom lens with no membrane in between two immiscible liquids. This allows for manipulation of the curvatures of the two different liquids to change the optical power of the lens. To offset the resulting change in focal plane, the image sensor is moved to the correct location. Thus, in this setup, no focal lens is needed downstream of the zoom lens.

EP 2 157 782 A2 discloses a stacked type camera module comprising one or more lens substrates having lenses provided thereon; an imaging substrate having an imaging device with a light receiving surface provided thereon; and one or more position adjusting substrates having actuators for adjusting the positional relationship between the substrates provided thereon, wherein the substrates are stacked such that an optical image of an object is formed on the light receiving surface of the imaging device through the lenses.

US 4,784,479 A discloses a varifocal optical system comprising a movable lens unit of negative refractive power, movable along an optical axis; a compensation lens unit of variable positive refractive power, having principal points, and compensating for the shift of an image surface resulting from the movement of said movable lens unit; an image plane; and means for varying the refractive power of said compensation lens unit in such a way that the principal point at said movable lens unit side of said principal points maintains a substantially same position relative to said image plane.

However, the prior art devices use deformable lenses instead of moveable lenses due to the limitations of the form factor of an endoscope. The small diameter of the endoscope requires small lenses to be used. In the prior art, if solid moveable lenses are used to zoom or focus, they require actuators along their outside edges which require additional radial space.

Thus, in order for conventional systems to use moving lenses, these lenses must be even smaller. The listed prior art above describes these limitations as necessitating the replacement of the smaller moving lenses with liquid deformable lenses. These liquid lenses have several disadvantages including the need for specialized actuators for displacing fluid, low durability and resilience, and higher optical imperfections like variable astigmatisms which cannot be corrected. They are also difficult to manufacture and use.

### SUMMARY OF THE INVENTION

It is therefore an object of the invention to provide the features of optical zoom and optical focus in a small form factor. Since the zoom lens is placed closest to the incoming light beam, the light beam can be expanded before focusing and capturing. This expanded beam allows for movable, solid lenses to be used in the now wider aperture area. The device disclosed in this application incorporates this novel feature to expand the beam before one or more, larger lens groups shape the light beam. With only one deformable lens, this system is easier to manufacture and use as well as cheaper.

The invention is defined by the appended claims. In accordance with the present invention there is provided an endoscope device comprising an endoscope with an original diameter and a camera head comprising:
a first lens group, including at least one deformable lens with a variable curvature;
a second lens group moveable axially relative to the first lens group; and
an image sensor within the camera head for capturing a light beam received from an endoscope,
wherein the first lens group has a variable negative optical power that expands the light beam received from the endoscope to a diameter larger than the original diameter of the endoscope and is fixed relative to the image sensor,
wherein the second lens group has a preset positive optical power, and
wherein the diameter of the second lens group is larger than the diameter of the first lens group.

In an exemplary embodiment of the endoscope, a camera head is provided that has one moving lens group and one deformable lens group with at least one lens of variable curvature. The deformable lens group receives the light beam from the endoscope and expands the light beam providing focus adjustment. The light beam is then passed to additional lens groups, at least one of which is a moveable lens which can provide zoom and focus of the light beam in conjunction with the varying curvature of the deformable lens.

In an embodiment, the deformable lens group can have a variable negative optical power expanding the light beam before being focused by one or two positive lens groups and captured by the image sensor. For example, the first positive lens group downstream from the deformable lens is moveable relative to the fixed deformable lens and fixed image sensor. Additional positive or negative lens groups can be added downstream of the moveable lens if needed.

In related examples not part of the claimed invention, the deformable lens group can have a variable positive optical power followed by a moveable negative lens group and then another fixed positive lens group. The moveable lens group would use compact actuators but still expands the beam before focusing the light beam onto the image sensor.

As used herein, at least in exemplary embodiments, optical power (also referred to as refractive power) is the degree to which a lens, a lens group or another optical system converges or diverges light. Generally, converging lenses converging lenses have positive optical power, while diverging lenses diverging lenses have negative power.

As used herein, at least in exemplary embodiments, a deformable lens is a lens that has a deformable portion, particularly a variable curvature. More particularly, at least in exemplary embodiments, a deformable lens is a lens that has variable optical power. Generally, at least in exemplary embodiments, in a deformable lens, the deformable portion can be tuned at least in part by an actuator that implements a certain actuating mechanism. Hence, at least in exemplary embodiments, tuning actuators may involve, but are not limited to, electrostatic actuators, electromagnetic actuators, piezo-motors, magneto-strictive actuators, stepper motors, and electroactive polymer actuators.

As used herein, at least in exemplary embodiments, a fixed lens or lens group has a fixed axial (longitudinal) position in the endoscope, and a moving lens or lens group has a variable axial (longitudinal) position in the endoscope. The moving lens or lens group may also be referred to as movable lens or lens group. A lens of a fixed lens group may be arranged as a deformable lens, which is not contrary to the above definitions, as the deformation is generally only present in a certain portion of the lens. Generally, in accordance with exemplary embodiments, a deformation induced in a deformable lens does not change the position of that lens.

Further scope of the applicability of the present invention will become apparent from the detailed description given hereinafter.

### BRIEF DESCRIPTION OF THE DRAWINGS

The present invention will become more fully understood from the detailed description given hereinbelow and the accompanying drawings which are given by way of illustration only, and thus are not limitative of the present invention, and wherein:
FIG. 1 is a prior art endoscope in use;
FIG. 2 is a camera head according to an illustrative example of the device that is not part of the claimed invention;
FIG. 3 is a camera head according to an exemplary embodiment;
FIG. 4 is the camera head of FIG. 3 without an optional second fixed positive lens group;
FIG. 5 is the camera head of FIG. 3 including the surrounding supporting structure;
FIG. 6A is a deformable lens with variability within a range of negative optical powers;
FIG. 6B is a deformable lens with variability within a range of positive optical powers; and
FIG. 6C is a deformable lens with variability within a range of positive and negative optical powers.

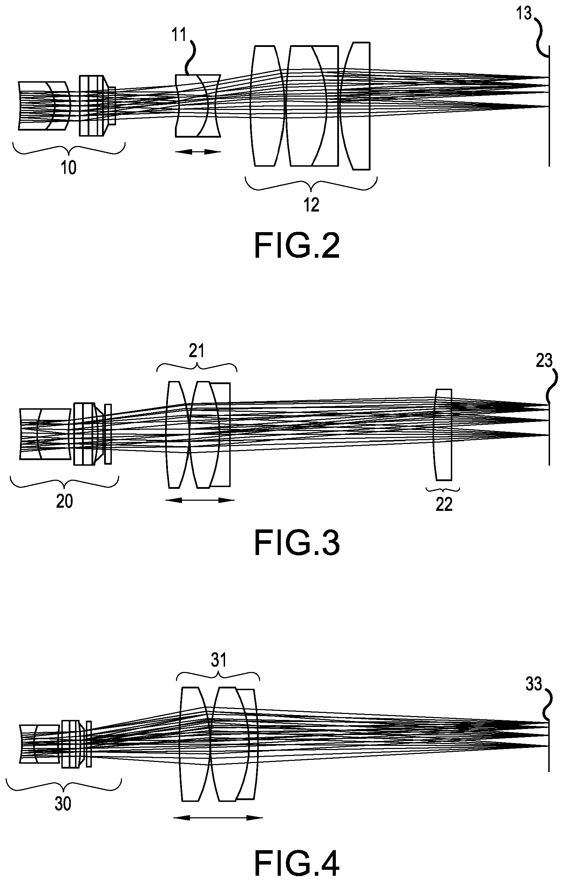

FIG. 3, FIG. 4 and FIG. 5 exemplify specific embodiments of the invention as claimed in claim 1. The remaining Figures illustrate the technical context, background and several aspects of the present invention that is defined by the appended claims.

### DETAILED DESCRIPTION OF THE DRAWINGS

The camera head of FIG. 2 includes a first positive, fixed lens group 10 with a deformable lens having variable curvature, a second negative, moving lens group 11 and a third positive, fixed lens group 12 which focuses the received light beam onto the CCD or CMOS image sensor 13. The camera head is coupled to the proximal end of an endoscope with the positive, fixed lens group 10 receiving the light beam from the endoscope.

The one or more deformable lenses in the first positive, fixed lens group 10 vary in curvature to vary the focal power of the positive, fixed lens group 10. The positive, fixed lens group 10 may also include wave plates, polarization plates, and other positive or negative lenses. Preferably the fixed lens group 10 is directly coupled to the optical fiber end or carrier lenses of the endoscope to reduce losses. The negative, moving lens group 11 expands the light beam more if moved closer to the positive, fixed lens group 10 and expands the light beam less if moved away from it.

The deformable lens can be made of, for example, birefringent liquid crystal, a transparent elastic membrane filled with fluid, or a two fluid interface. The deformable lenses can be tuned at least in part by an electrostatic actuator, an electromagnetic actuator, a piezo-motor, a magneto-strictive actuator, a stepper motor, or an electroactive polymer actuator for a high focus tuning range.

The camera head of FIG. 3 includes a first negative, fixed lens group 20 with a deformable lens having variable curvature, a second positive, moving lens group 21 and a third positive, fixed lens or lens group 22 which focuses the received light beam onto the image sensor 23. The deformable lens in this embodiment has a variable negative or positive power for expanding the incoming light beam by varying amounts providing zoom. The positive, moving lens group 21 adjusts the focus of the light beam in response to the varying expansion of the deformable lens to maintain a focused image at the image sensor 23.

The camera head of FIG. 4 includes a first negative, fixed lens group 30 with a deformable lens having variable curvature and a second positive, moving lens group 31 which focuses the received light beam onto the image sensor 33. These two lens groups perform focusing and zoom in a small form factor and with minimal lenses. This results in a camera head with low losses and less chromatic aberrations due to the minimal number of lens interfaces.

The initial negative, fixed lens group 20 or 30 expands the light beam to a diameter larger than the original diameter of the endoscope. This expanded light beam is more easily and losslessly manipulated. Larger, off-the-shelf lenses can also be used for the larger diameters. The image sensor 33 or 23 also has a larger imaging area to receive the expanded light beam. The light beam can also be split for imaging by more than one image sensor to provide a stereoscopic or higher-resolution view.

Any of the elements in FIG. 2-4 are interchangeable or insertable into any of these camera heads. For example, the negative, moving lens group 11 could be inserted after elements 20 or 30 to further expand the light beam. Likewise, element 12 could also be made moveable. Alternatively, the deformable lens in elements 10, 20 and 30 can vary between positive and negative optical powers or these elements can include a number of deformable lenses that collectively sum to positive or negative optical powers. Likewise, the optical powers of the individual lenses of the lens groups illustrated in FIG. 2-4 are purely exemplary and may include additional negative or positive lenses in each lens group.

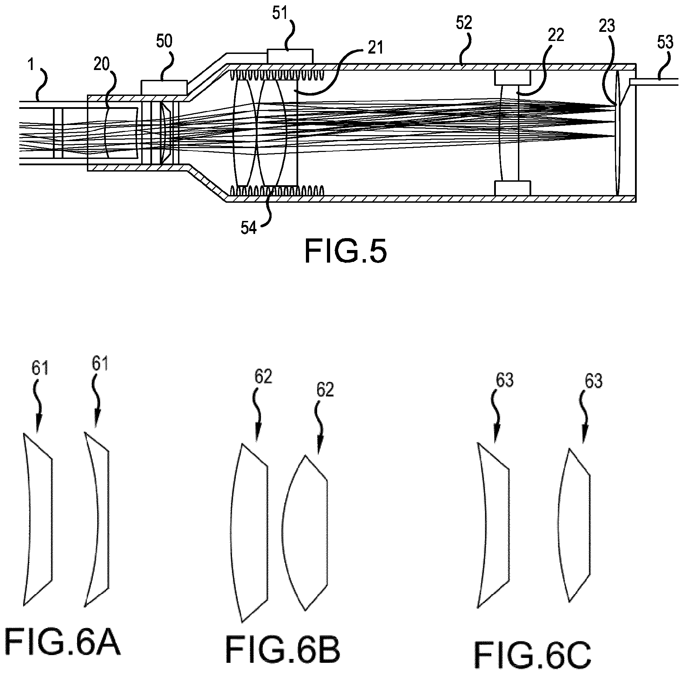

The extraneous structure of the camera head is shown in FIG. 5 including the housing 52, the mechanical actuators 54 for moving the moveable lens groups 21, the zoom controller 50 for deforming the deformable lenses 20, the sensor output cable 53, the electronic controller 51, and the coupling to the endoscope 1. The electronic controller 51 signals the mechanical actuators 54 and the zoom controller 50, to control the moveable lens groups 21 and the deformable lenses 20. Preferably, the zoom controller 50 includes electric actuators for deforming the deformable lenses 20. The output of the camera head can be passed to a computer or screen for processing and display.

The mechanical actuators 54 for moving the lenses can be wormscrew actuators, solenoid actuators, rail-guided actuators, stepper motors, or any other linear actuator. The mechanical actuators may be controlled by an autofocus algorithm performed by electronic controller 51 in response to the zoom controller 50 and is advantageously electrically connected to the zoom controller 50. The electronic controller 51 can also both be controlled by a computer that synchronizes them.

FIG. 6A shows a deformable lens 61 that can vary between different negative optical powers. FIG. 6B shows a deformable lens 62 that can vary between different positive optical powers, and FIG. 6C shows a deformable lens 63 that can vary between positive and negative optical powers. The exemplary deformable lenses shown here have only one deformable surface, but can have two deformable surfaces which deform in parallel. The left side of each of the lenses of FIG. 6A-6C is a deformable membrane with the internal portion of the lens being filled with a fluid.

## Claims

1. An endoscope device comprising an endoscope with an original diameter and a camera head configured to receive a light beam from the endoscope, the camera head comprising, in order from the endoscope side:
a first lens group (20, 30) including at least one deformable lens (61; 62; 63) with a variable curvature;
a second lens group (21, 31) configured to move axially relative to the first lens group (20, 30), wherein the second lens group (21, 31) has a preset positive optical power; and
an image sensor (23, 33) within the camera head for capturing a light beam received from the endoscope,
**characterized in that**
the first lens group has a variable negative optical power, wherein the first lens group is configured to receive the light beam from the endoscope and expand the light beam to a diameter larger than the original diameter of the endoscope , and wherein the first lens group is fixed relative to the image sensor , and
**in that** the diameter of the second lens group is larger than the diameter of the first lens group.

2. The endoscope device according to claim 1, the camera head further comprising:
a third lens group (22) having a positive optical power.

3. The endoscope device according to claim 2, wherein the third lens group is fixed relative to the image sensor .

4. The endoscope device according to any of claims 1 to 3, wherein the at least one deformable lens (61; 62; 63) is a liquid lens.

5. The endoscope device according to claim 4, wherein the at least one deformable lens (61; 62; 63) is configured to be actuated by a mechanical actuator or electrostatic actuator.

6. The endoscope device according to any of claims 1 to 5, wherein the first lens group includes at least two deformable lenses (61; 62; 63).

7. The endoscope device according to any of claims 1 to 6, wherein the camera head is configured to be attached to a proximal end of the endoscope.

8. The endoscope device according to any of claims 1 to 7, wherein the first lens group is a zoom lens.

9. The endoscope device according to any of claims 1 to 8, wherein the second lens group is a focusing lens.

## Patentansprüche

1. Endoskopvorrichtung, die ein Endoskop mit einem Ursprungsdurchmesser und einen Kamerakopf aufweist, der dazu ausgestaltet ist, einen Lichtstrahl von dem Endoskop zu empfangen, wobei der Kamerakopf, in der Reihenfolge von der Seite des Endoskops, Folgendes aufweist:
eine erste Linsengruppe (20; 30), die mindestens eine verformbare Linse (61; 62; 63) mit einer variablen Krümmung umfasst;
eine zweite Linsengruppe (21; 31), die dazu ausgestaltet ist, sich axial relativ zu der ersten Linsengruppe (20; 30) zu bewegen, wobei die zweite Linsengruppe (21; 31) eine voreingestellte positive optische Brechkraft aufweist; und
einen Bildsensor (23; 33) innerhalb des Kamerakopfes zur Erfassung eines von dem Endoskop empfangenen Lichtstrahls,
**dadurch gekennzeichnet, dass**
die erste Linsengruppe eine variable negative optische Brechkraft aufweist, wobei die erste Linsengruppe dazu ausgestaltet ist, den Lichtstrahl von dem Endoskop zu empfangen und den Lichtstrahl auf einen Durchmesser aufzuweiten, der größer als der Ursprungsdurchmesser des Endoskops ist, und wobei die erste Linsengruppe relativ zu dem Bildsensor festgelegt ist, und
der Durchmesser der zweiten Linsengruppe größer als der Durchmesser der ersten Linsengruppe ist.

2. Endoskopvorrichtung nach Anspruch 1, wobei der Kamerakopf ferner Folgendes umfasst:
eine dritte Linsengruppe (22) mit einer positiven optischen Brechkraft.

3. Endoskopvorrichtung nach Anspruch 2, wobei die dritte Linsengruppe relativ zu dem Bildsensor festgelegt ist.

4. Endoskopvorrichtung nach einem der Ansprüche 1 bis 3, wobei die mindestens eine verformbare Linse (61; 62; 63) eine Flüssigkeitslinse ist.

5. Endoskopvorrichtung nach Anspruch 4, wobei die mindestens eine verformbare Linse (61; 62; 63) dazu ausgestaltet ist, durch einen mechanischen Aktuator oder einen elektrostatischen Aktuator betätigt zu werden.

6. Endoskopvorrichtung nach einem der Ansprüche 1 bis 5, wobei die erste Linsengruppe mindestens zwei verformbare Linsen (61; 62; 63) umfasst.

7. Endoskopvorrichtung nach einem der Ansprüche 1 bis 6, wobei der Kamerakopf dazu ausgestaltet ist, an einem proximalen Ende des Endoskops angebracht zu werden.

8. Endoskopvorrichtung nach einem der Ansprüche 1 bis 7, wobei die erste Linsengruppe eine Zoomlinse ist.

9. Endoskopvorrichtung nach einem der Ansprüche 1 bis 8, wobei die zweite Linsengruppe eine Fokussierlinse ist.

## Revendications

1. Dispositif endoscopique comprenant un endoscope avec un diamètre d'origine et une tête de caméra conçue pour recevoir un faisceau lumineux provenant de l'endoscope, la tête de caméra comprenant, dans l'ordre du côté de l'endoscope :
un premier groupe de lentilles (20, 30) comprenant au moins une lentille déformable (61 ; 62 ; 63) avec une courbure variable ;
un deuxième groupe de lentilles (21, 31) conçu pour se déplacer axialement par rapport au premier groupe de lentilles (20, 30), dans lequel le deuxième groupe de lentilles (21, 31) a une puissance optique positive prédéfinie ; et
un capteur d'images (23, 33) à l'intérieur de la tête de caméra pour capturer un faisceau lumineux reçu de l'endoscope,
**caractérisé en ce que** le premier groupe de lentilles a une puissance optique négative variable, dans lequel le premier groupe de lentilles est conçu pour recevoir le faisceau lumineux provenant de l'endoscope et étendre le faisceau lumineux à un diamètre plus grand que le diamètre d'origine de l'endoscope, et dans lequel le premier groupe de lentilles est fixe par rapport au capteur d'image, et
**en ce que** le diamètre du deuxième groupe de lentilles est plus grand que le diamètre du premier groupe de lentilles.

2. Dispositif endoscopique selon la revendication 1, la tête de caméra comprenant en outre :
un troisième groupe de lentilles (22) ayant une puissance optique positive.

3. Dispositif endoscopique selon la revendication 2, dans lequel le troisième groupe de lentilles est fixe par rapport au capteur d'images.

4. Dispositif endoscopique selon l'une quelconque des revendications 1 à 3, dans lequel l'au moins une lentille déformable (61 ; 62 ; 63) est une lentille liquide.

5. Dispositif endoscopique selon la revendication 4, dans lequel l'au moins une lentille déformable (61 ; 62 ; 63) est conçue pour être actionnée par un actionneur mécanique ou un actionneur électrostatique.

6. Dispositif endoscopique selon l'une quelconque des revendications 1 à 5, dans lequel le premier groupe de lentilles comprend au moins deux lentilles déformables (61 ; 62 ; 63).

7. Dispositif endoscopique selon l'une quelconque des revendications 1 à 6, dans lequel la tête de caméra est conçue pour être fixée à une extrémité proximale de l'endoscope.

8. Dispositif endoscopique selon l'une quelconque des revendications 1 à 7, dans lequel le premier groupe de lentilles est un objectif à focale variable.

9. Dispositif endoscopique selon l'une quelconque des revendications 1 à 8, dans lequel le deuxième groupe de lentilles est une lentille de mise au point.
